(19) Europäisches Patentamt

European Patent Office

Office européen des brevets

(11) Veröffentlichungsnummer: **0 315 775 B1**

(12) **EUROPÄISCHE PATENTSCHRIFT**

(45) Veröffentlichungstag der Patentschrift: **02.01.92**

(21) Anmeldenummer: **88116549.2**

(22) Anmeldetag: **06.10.88**

(51) Int. Cl.⁵: **F16B 7/04**

(54) Einrichtung zum Verbinden eines Längsträgers mit einem sich quer dazu erstreckenden Anbauteil.

(30) Priorität: **07.11.87 DE 3737895**

(43) Veröffentlichungstag der Anmeldung:
**17.05.89 Patentblatt 89/20**

(45) Bekanntmachung des Hinweises auf die
Patenterteilung:
**02.01.92 Patentblatt 92/01**

(84) Benannte Vertragsstaaten:
**DE FR GB IT**

(56) Entgegenhaltungen:
**DE-B- 2 416 581**
**GB-A- 1 478 751**
**GB-A- 2 049 093**

(73) Patentinhaber: **ROBERT BOSCH GmbH**
**Postfach 10 60 50**
**W-7000 Stuttgart 10(DE)**

(72) Erfinder: **Maier, Gernot**
**Im Geiger 81**
**W-7000 Stuttgart 50(DE)**
Erfinder: **Schmid, Thomas, Dipl.-Ing.**
**Friedrichstrasse 108**
**W-7140 Ludwigsburg(DE)**
Erfinder: **Rothfuss, Peter**
**Johann-Sebastian-Bach-Strasse 6/1**
**W-7257 Ditzingen(DE)**

Rank Xerox (UK) Business Services

## Beschreibung

Die Erfindung geht aus von einer Einrichtung nach der Gattung des Hauptanspruchs. Bei einer bekannten Einrichtung dieser Gattung (DE-A-3438773) sind der Spannkopf durch eine Gewindemutter und das Verbindungselement durch eine Schraube gebildet, die in die Gewindemutter eingeschraubt und außerhalb der Längsnut mit ihrem Kopf in einer abgestuften Querbohrung eines Widerlagerzylinders aufgenommen ist, welcher den Spannflächenträger bildend passend in einer Ausnehmung des Anbauteiles sitzt, wobei die Festspannkräfte durch Anziehen der Schraube hervorgerufen werden. Diese Ausführung benötigt mehrere Kleinteile und einen erhöhten Fertigungsaufwand zur Befestigung des Anbauteils am Längsträger, insbesondere wenn bei höher beanspruchten Verbindungen ein zweiter Befestigungsteilsatz vorgesehen wird.

Die erfindungsgemäße Anordnung mit den kennzeichnenden Merkmalen des Hauptanspruchs hat demgegenüber den Vorteil, daß die Befestigung des Anbauteils am Längsträger über ein einziges Teil mit geringem Zeitaufwand und ohne Zuhilfenahme von Spezialwerkzeugen erfolgen kann.

Durch die in den Unteransprüchen aufgeführten Maßnahmen sind vorteilhafte Weiterbildungen der Anordnung nach dem Hauptanspruch möglich.

Besonders vorteilhaft ist die erfindungsgemäße Anordnung bei Förderbahnen, welche als Streckenprofile zwei parallel nebeneinander angeordnete Längsträger haben, die über Querverbinder miteinander verbunden sind. In diesem Anwendungsfall werden die Querverbinder an beiden Stirnenden über ein in eine Längsnut des benachbarten Längsträgers eingreifendes Spannstück mit den Längsträgern verkeilt. Wenn die Spannstücke an den beiden Stirnseiten formgleich und außerdem gemäß den Ansprüchen 4 und/oder 5 ausgebildet sind, ist sichergestellt, daß die Spannstücke nach dem Einstecken in die Längsnuten und Drehen um 90 Grad die richtige Lage einnehmen und danach der Querverbinder auf die Spannstücke aufgesteckt und in die Spannstellung gedrückt beziehungsweise mit einem Schonhammer eingeschlagen werden kann. Die Verbindung der beiden Längsträger erfolgt ohne Schrauben und Schraubwerkzeuge, wobei auch eine vorherige Justage der Längsträger entfällt.

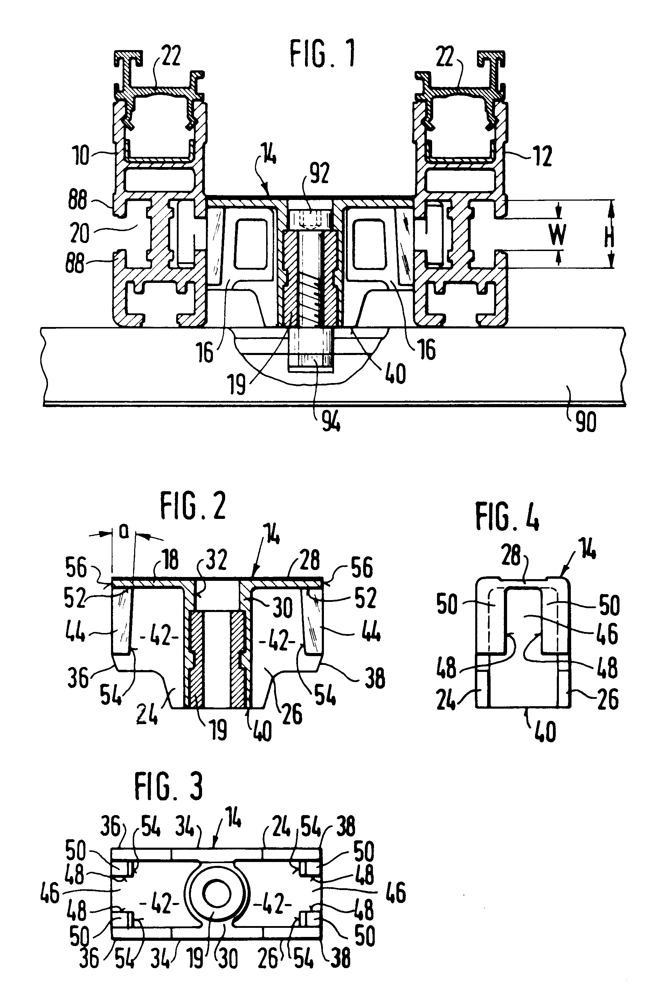

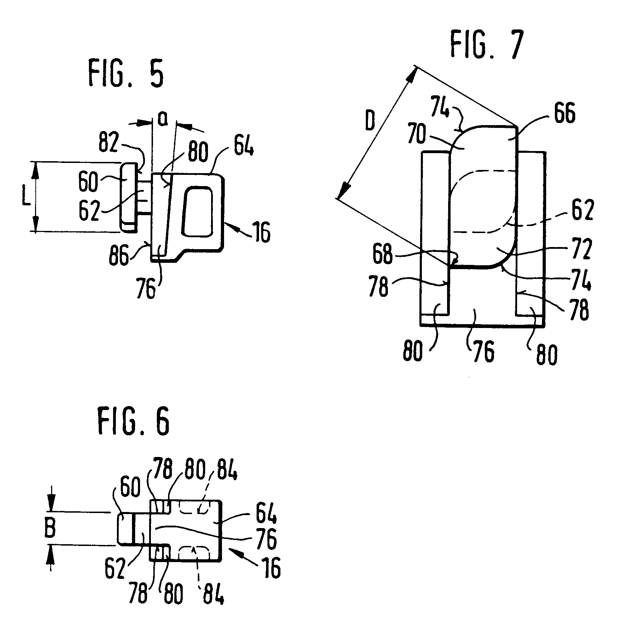

Ein Ausführungsbeispiel der Erfindung ist in der Zeichnung dargestellt und in der nachfolgenden Beschreibung erläutert. Es zeigen Figur 1 einen Schnitt durch eine Querverbindung von zwei Längsträgern einer Förderbahn, Figur 2 das Distanzstück der Querverbindung nach Figur 1 im Längsschnitt, Figur 3 die Unteransicht und Figur 4 eine Seitenansicht des Distanzstückes nach Figur 2, Figur 5 eine Seitenansicht und Figur 6 eine Draufsicht des Spannstückes der Querverbindung nach Figur 1 und Figur 7 in vergrößertem Maßstab eine Stirnansicht des Spannstückes in Richtung des Pfeiles in Figur 5.

Die erfindungsgemäße Querverbindung von zwei als Streckenprofile ausgebildeten Längsträger 10, 12 einer Förderbahn besteht aus einem Distanzstück 14 und zwei formgleichen Spannstücken 16, die aus glasfaserverstärktem Kunststoff bestehen. Das Distanzstück 14 ist gebildet aus einem gespritzten Gehäusekörper 18 aus gleichem Stoff, in den an zentraler Lage eine metallische Buchse 19 eingeformt ist. Die Längsträger 10, 12 sind an beiden Seitenwänden mit einer im Querschnitt T-förmigen Längsnut 20 versehen und an der oberen Stirnseite je mit einem aufgerasteten Führungsprofil 22 bestückt, welches zum Abstützen und seitlichen Führen eines endlosen Fördergliedes, wie Förderband oder Förderkette, dient.

Der Gehäusekörper 18 des Distanzstücks 14 hat zwei Seitenwände 24, 26, die über eine Kopfwand 28 einstückig miteinander verbunden sind. In Längsmitte sind die Seitenwände 24, 26 über einen auch an die Kopfwand 28 angeformten Steg 30 verbunden, der eine abgestufte Bohrung 32 hat, in welche die Buchse 19 eingeformt ist. Der Steg 30 mit der Buchse 19 und die mittleren Bereiche 34 der Seitenwände 24, 26 sind gegenüber deren äußeren Bereichen 36, 38 nach unten gezogen und bilden dort eine ebene Stützfläche 40, deren Zweck nachstehend noch näher beschrieben ist.

Im Gehäusekörper 18 sind zu beiden Seiten des Steges 30 Kammern 42 gebildet, die nach den Seiten hin durch Stirnwände 44 begrenzt sind. Diese haben je eine schlitzartige Aussparung 46, welche durch Schulterflächen 48 an den seitlichen Wandbereichen 50 und oben durch die Kopfwand 28 begrenzt ist. An den Innenseiten sind die seitlichen Wandbereiche 50 durch Spannflächen 54 begrenzt, die je einen Keilwinkel a mit der Außenfläche 56 der Stirnwand 44 einschließen.

Die Spannstücke 16 haben je einen Spannkopf 60, der über ein Halsteil 62 mit einem quaderförmigen Spannflächenträger 64 einstückig verbunden ist. Der Spannkopf 60 hat die Form eines Hammerkopfes, dessen Länge L größer und dessen Breite B kleiner als die seitliche Öffnungsweite W der Längsnuten 20 ist. Ferner ist der Diagonalabstand D (Figur 7) von zwei sich diametral gegenüberliegenden Ecken 66, 68 des Spannkopfes 60 größer als die Höhe H der Längsnuten 20, wogegen die beiden anderen Eckbereiche 70, 72 des Spannkopfes 60 mit Abrundungen 74 versehen sind, welche ein Drehen des von der Seite her in die Längsnut 20 eingesteckten Spannkopfes 60 nur in einer Richtung um 90 Grad ermöglichen. Die Höhe und die Breite des Halsteils 62 entsprechen der Breite B des Spannkopfes 60, wobei zwei gegenüberliegende Eckbereiche ebenfalls derart abgerundet sind, daß ein Drehen des in die Längsnut 20 eingesteckten Spannstückes 16 nur nach einer Seite und nur um 90 Grad möglich ist.

Der Spannflächenträger 64 ist auf dem Spannkopf 60 zugekehrten Seite mit einem leistenförmigen Vorsprung 76 versehen, der seitlich von Schulterflächen 78 begrenzt ist und dessen Breite der Breite der Aussparungen 46 im Distanzstück 14 entspricht. Beim Ausführungsbeispiel stimmen die Breite des Vorsprungs 76, des Halsteils 62 und des Spannkopfes 60 überein. Zu beiden Seiten des Vorsprunges 76 sind Spannflächen 80 gebildet, die zu der Rückenfläche 82 des Spannkopfes 60 den gleichen Winkel a einschließen wie die Spannflächen 54 mit den Außenflächen 56 des Distanzstükkes 14. Der übrige Teil des Spannflächenträgers 64 ist an den Seiten mit taschenartigen Vertiefungen 84 zur Materialeinsparung versehen.

Der Vorsprung 76 des Spannflächenträgers 64 ist von einer Stirnfläche 86 begrenzt, die zur Rükkenfläche 82 des Spannkopfes 60 einen Abstand hat, der etwas größer als die Wandstärke der die Einführöffnung der Längsnuten 20 begrenzenden Wandabschnitte 88 (Figur 1) der Längsträger 10, 12 ist. Die Teile sind ferner so bemessen, daß bei in das Distanzstück 14 eingesetzten, bis zur Anlage an der Kopfwand 28 vorgeschobenen und an den Spannflächen 54 anliegenden Spannstücken 16 sich zwischen den stirnseitigen Außenflächen 56 des Distanzstückes 14 und den Rückenflächen 82 der Spannstücke 16 je ein Abstand ergibt, der etwas kleiner als die Wandstärke der Wandabschnitte 88 der Längsträger 10, 12 ist. Die Maßdifferenz ist so gewählt, daß sie auch im ungünstigsten Toleranzfall durch elastische Verformung (Zusammendrückung) der aus glasfaserverstärktem Kunststoff bestehenden Teile 14, 16 aufgenommen werden kann.

Beim Herstellen der Querverbindung werden zweckmäßig zunächst die Spannstücke 16 in die Längsnuten 20 der Längsträger 10, 12 seitlich eingesteckt und um 90 Grad in die in Figur 1 dargestellte Lage gedreht. Dabei sorgen die beschriebenen Gestaltungsmerkmale dafür, daß die Spannstücke nicht in eine falsche Stellung gebracht werden können. Sodann wird das Distanzstück 14 von oben her auf die Spannstücke 16 aufgesteckt, wobei die keilförmigen Spannflächen 54, 80 an den Teilen miteinander in Eingriff kommen und die Teile an die Wandabschnitte 88 der Längsträger 10, 12 angepreßt werden. Die Schulterflächen 48 am Distanzstück 14 und die daran anliegenden Schulterflächen 78 der Spannstücke 16 sorgen dafür, daß sich die Teile nicht gegeneinander verdrehen können. Mit einem Schonhammer kann das Distanzstück 14 soweit auf die Spannstücke 16 aufgeschlagen werden, bis die Kopfwand 28 des Distanzstückes 14 zur Anlage an den Spannstücken 16 kommt.

In manchen Fällen kann es zweckmäßig sein, das Distanzstück 14 an einem Querträger 90 zu befestigen (Figur 1), wozu eine Schraube 92 dient, welche die metallische Buchse 19 des Distanzstükkes 14 durchsetzt und dieses nach Anziehen einer Gewindemutter 94 mit seiner Stützfläche 40 gegen den Querträger 90 spannt. Bei einer solchen zusätzlichen Befestigung ist es zweckmäßig, wenn die beiden Längsträger 10, 12 am Querträger 90 aufliegen, so daß sich die Keilverbindung zwischen dem Distanzstück 14 und den Längsträgern 10, 12 auch bei extrem hohen Beanspruchungen nicht lösen kann.

**Patentansprüche**

1. Einrichtung zum Verbinden eines Längsträgers mit einem sich quer dazu erstreckenden Anbauteil, mit einem Spannkopf (60), in eine hinterschnittene Längsnut in der dem Anbauteil zugekehrten Seitenwand des Längsträgers greift, sich an deren Hinterschneidungsschultern abstützt und über ein aus der Längsnut heraustretendes Verbindungselement (62) mit einem Spannflächenträger (64) verbunden ist, der das mit einer Gegenspannfläche versehene Anbauteil an die Seitenwand des Längsträgers preßt, dadurch gekennzeichnet, daß der Spannkopf (60), das Verbindungselement (62) und der Spannflächenträger (64) zusammen ein formstabiles Spannstück (16) bilden, dessen Spannfläche (80) mit der an den Hinterschneidungsschultern der Längsnut (20) zur Anlage kommenden Rückenfläche (82) des Spannkopfes (60) einen Keilwinkel (a) einschließt und daß die Gegenspannfläche (54) am Anbauteil (14) zu dessen Anlagefläche (56) am Längsträger (10, 12) im gleichen Keilwinkel (a) angeordnet ist, wobei die Spannflächen (80) am Spannstück (16) mit den Gegenspannflächen (54) am Anbauteil (14) in Eingriff kommen und daß das Spannstück (16) und das Anbauteil (14) mit in gegenseitigem Eingriff stehenden Schultern (78, 48) versehen sind, die ein Verdrehen des Spannstückes (16) um die Längsachse des Anbauteiles (14) verhindern.

2. Einrichtung nach Anspruch 1, dadurch gekennzeichnet, daß die Längsnut (20) im Längsträger ein T-förmiges Querschnittsprofil und der Spannkopf (60) die Form eines Hammerkopfes hat, dessen Breite (B) kleiner und dessen Länge (L) größer als die seitliche Öffnungsweite (W) der Längsnut (20) ist.

3.  Einrichtung nach Anspruch 2, dadurch gekennzeichnet, daß der Diagonalabstand (D) von zwei sich diametral gegenüberliegenden Ecken (66, 68) des Spannkopfes (60) größer als die Höhe (H) der Längsnut (20) ist, und daß die beiden anderen Eckbereiche (70, 72) des Spannkopfes (60) mit Abrundungen (74) beziehungsweise Abschrägungen versehen sind, die ein Drehen des von der Seite her in die Längsnut (20) eingesteckten Spannkopfes (60) nur in einer Richtung um etwa 90 Grad ermöglichen.

4.  Einrichtung nach Anspruch 2 oder 3, dadurch gekennzeichnet, daß der das Verbindungselement bildende Bereich (62) des Spannstücks (16) ein von der Kreisform derart abweichendes Querschnittsprofil hat, daß der Spannkopf (60) nach dem seitlichen Einstecken in die Längsnut (20) nur um etwa 90 Grad drehbar ist.

5.  Einrichtung nach einem der vorgehenden Ansprüche, dadurch gekennzeichnet, daß der den Spannflächenträger bildende Bereich (64) des Spannstückes (16) im wesentlichen quaderförmig gestaltet und in eine entsprechend geformte Ausnehmung (42) im Anbauteil (14) einfügbar ist, wobei die Spannflächen (80) am Spannstück (16) mit den Gegenspannflächen (54) am Anbauteil (14) in Eingriff kommen.

6.  Einrichtung nach Anspruch 5, dadurch gekennzeichnet, daß der quaderförmige Bereich (64) des Spannstücks (16) an seiner dem Spannkopf (60) zugekehrten Seitenwand einen leistenförmigen Vorsprung (76), sowie zu dessen beiden Seiten je eine Spannfläche (80) aufweist und daß ferner die Ausnehmung (42) im Anbauteil (14) von einer Stirnwand (44) begrenzt ist, welche mit einer den leistenförmigen Vorsprung (76) des Spannstücks (16) aufnehmenden Aussparung (46) und zu deren beiden Seiten mit je einer Gegenspannfläche (54) versehen ist.

7.  Einrichtung zum Verbinden von Längsträgern, insbesondere nach einem der vorhergehenden Ansprüche, dadurch gekennzeichnet, daß ein Anbauteil (14) das Distanzstück einer Querverbindung von zwei im Abstand parallel nebeneinander angeordneten Längsträgern (Streckenprofilen 10, 12) einer Förderbahn ist und an beiden Stirnenden über je ein in eine Längsnut (20) des benachbarten Längsträgers (10, 12) eingreifendes Spannstück (16) mit dem Längsträger (10, 12) verkeilt ist.

8.  Einrichtung nach Anspruch 7, dadurch gekennzeichnet, daß das Distanzstück (14) mit Mitteln zum Befestigen an einer als Auflage für die Längsträger (10, 12) dienenden beziehungsweise an den Längsträgern (10, 12) sich abstützenden Bauteil (90) versehen ist.

9.  Einrichtung nach einem der vorhergehenden Ansprüche, dadurch gekennzeichnet, daß das beziehungsweise die Spannstücke (16) und/oder das Anbauteil (14) beziehungsweise das Distanzstück des Querverbinders aus glasfaserverstärktem Kunststoff bestehen.

**Claims**

1.  Device for connecting a longitudinal girder to an attachment piece extending crosswise thereto, having a gripping head (60) which engages in an undercut longitudinal groove in the side wall of the longitudinal girder facing the attachment piece, rests against the undercut shoulders thereof, and is connected by means of a connecting element (62) coming out of the longitudinal groove to a gripping surface support (64) which presses the attachment piece, which is provided with a complementary gripping surface, against the side wall of the longitudinal girder, characterised in that the gripping head (60), the connecting element (62) and the gripping surface support (64) together form a dimensionally stable gripping piece (16) whose gripping surface (80) forms a wedge angle (a) with the rear face (82) of the gripping head (60) coming to rest against the undercut shoulders of the longitudinal groove (20), and in that the complementary gripping surface (54) on the attachment piece (14) is disposed at the same wedge angle (a) to its contact face (56) with the longitudinal girder (10, 12), while the gripping surfaces (80) on the gripping piece (16) engage with the complementary gripping surfaces (54) on the attachment piece (14), and in that the gripping piece (16) and the attachment piece (14) are provided with mutually engaging shoulders (78, 48), which prevent rotation of the gripping piece (16) about the longitudinal axis of the attachment piece (14).

2.  Device according to Claim 1, characterised in that the longitudinal groove (20) in the longitudinal girder has a T-shaped cross-section profile, and the gripping head (60) is in the form of a hammer head whose width (B) is smaller and whose length (L) is greater than the lateral opening width (W) of the longitudinal groove (20).

3. Device according to Claim 2, characterised in that the diagonal distance (D) between two corners (66, 68) of the gripping head (60) lying diametrically opposite each other is greater than the height (H) of the longitudinal groove (20), and in that the other two corner regions (70, 72) of the gripping head (60) are provided with curvatures (74) or chamfers which permit rotation of the gripping head (60) inserted from the side into the longitudinal groove (20) in only one direction through approximately 90 degrees.

4. Device according to Claim 2 or 3, characterised in that the region (62) of the gripping piece (16) forming the connecting element has a cross-section profile differing from the circular shape in such a way that the gripping head (60) is rotatable only through about 90 degrees after lateral insertion into the longitudinal groove (20).

5. Device according to any of the preceding claims, characterised in that the region (64) of the gripping piece (16) forming the gripping surface support is made essentially square and can be inserted into a correspondingly shaped recess (42) in the attachment piece (14), in which case the gripping surfaces (80) on the gripping piece (16) engage with the complementary gripping surfaces (54) on the attachment piece (14).

6. Device according to Claim 5, characterised in that the square-shaped region (64) of the gripping piece (16) has on its side wall facing the gripping head (60) a strip-shaped projection (76) and at each of its two sides a gripping surface (80), and in that the recess (42) in the attachment piece (14) is also bounded by an end wall (44) which is provided with a recess (46) accommodating the strip-shaped projection (76) of the gripping piece (16) and with a complementary gripping surface (54) at each of its two sides.

7. Device for connecting longitudinal girders, in particular according to any of the preceding claims, characterised in that an attachment piece (14) is the spacer of a cross connection of two longitudinal girders (line profiles 10, 12) of a conveyor track which are disposed in parallel beside each other with a space between them, and is wedged at the two end faces to the longitudinal girder (10, 12) by means of in each case a gripping piece (16) engaging in a longitudinal groove (20) of the adjacent longitudinal girder (10, 12).

8. Device according to Claim 7, characterised in that the spacer (14) is provided with means for fastening to a component (90) which serves as a support for the longitudinal girders (10, 12) or is supported on the longitudinal girders (10, 12).

9. Device according to any of the preceding claims, characterised in that the gripping piece(s) (16) and/or the attachment piece (14) or the spacer of the cross connector are made of glass fibre-reinforced plastic.

**Revendications**

1. Dispositif pour connecter un support longitudinal à une pièce s'y rattachant en travers, avec une tête de serrage (60), qui vient en prise dans une rainure longitudinale dans la paroi latérale, tournée vers la pièce, au support longitudinal, s'appuie sur les épaulements de contre dépouilles et est relié par un élément de liaison (62), faisant saillie hors de la rainure longitudinale, à un support (64) de surface de serrage, qui presse la pièce pourvue d'une surface de contre-serrage, sur la paroi latérale du support longitudinal, dispositif caractérisé en ce que la tête de serrage (60), l'élément de liaison (62) et le support (64) de surface de serrage forment ensemble une pièce de serrage (16) indéformable, dont la surface de serrage (80) forme avec la surface arrière (82) venant en appui sur les épaulements de contre-dépouille de la rainure longitudinale (20) un angle de coincement (a) et en ce que la surface (54) de contre-serrage est disposée sur la pièce (14) sur la surface d'appui (56) sur le support longitudinal (10,12) avec le même angle de coincement (a), étant noté que les surfaces de serrage (80) viennent en prise sur la pièce de serrage (16) avec les surfaces (54) de contre-serrage sur la pièce (14) et que la pièce de serrage (16) et la pièce (14) sont pourvues d'épaulements (74,78) venant en prise mutuellement, épaulements qui empêchent une rotation de la pièce de serrage (16) autour de l'axe longitudinal de la pièce (14).

2. Dispositif selon la revendication 1, caractérisé en ce que la rainure longitudinale (20) dans le support longitudinal a en section transversale un profil en forme de T et la tête de serrage (60) à la forme d'une tête de marteau, dont la largeur (B) est plus petite et dont la longueur (4) est plus grande que la largeur d'ouverture latérale (W) de la rainure longitudinale (20).

3. Dispositif selon la revendication 1, caractérisé en ce que la distance diagonale (D) de deux angles se trouvant diamétralement en face l'un de l'autre (66,68) de la tête de serrage (60) est plus grande que la hauteur (4) de la rainure longitudinale (20) et que les deux autres zones angulaires (40,72) de la tête de serrage (60) sont pourvues d'arrondis (74) ou bien de chanfreins, qui permettent à la tête de serrage (60) enfoncée par le côté dans la rainure longitudinale (20) de tourner seulement dans un sens d'environ 90°.

4. Dispositif selon la revendication 2 ou 3, caractérisé en ce que la zone (62) de la pièce de serrage (16) qui forme l'élément de liaison a un profil en section transversale s'écartant de la forme d'un cercle d'une manière telle que la tête de serrage (60) après l'enfoncement latéral dans la rainure longitudinale (20) ne peut tourner que d'environ 90°.

5. Dispositif selon l'une des revendications précédents, caractérisé en ce que la zone (64) de la pièce de serrage (16) formant le support de surface de serrage, a une forme essentiellement parallélépipèdique et peut être introduite dans un évidement (42) de forme correspondante dans la pièce (14), les faces de serrage (80) venant en prise sur la pièce de serrage (16) avec la surface de contreserrage (54) sur la pièce (14).

6. Dispositif selon la revendication 5, caractérisé en ce que la zone (64) de forme parallélépipèdique de la pièce de serrage (16) présente sur sa paroi latérale tournée vers la tête de serrage (60) une saillie (76) en forme de nervure, ainsi que des deux côtés de celle-ci une surface de serrage (80) et en ce que en outre l'évidement (42) dans la pièce (14) est délimité par une paroi frontale (44) qui est pourvue d'un évidement (46) recevant la saillie (76) en forme de nervure, de la pièce de serrage (16) et sur chacun de ses deux côtés d'une surface de contreserrage (54).

7. Dispositif pour connecter un support longitudinal, en particulier selon l'une des revendications précédentes, caractérisé en ce que la pièce (14) est la pièce d'écartement d'une liaison transversale de deux supports longitudinaux (profils de ligne 10, 12) d'une voie portative, disposées parallèlement côte à côte à une certaine distance et est coincée à ses deux extrémités, par une pièce de serrage (16) venant en prise dans une rainure longitudinale (20) du support longitudinal (10, 12) voisin, avec le support longitudinal (10, 12).

8. Dispositif selon la revendication 7, caractérisé en ce que la pièce (14) d'écartement est pourvue de moyens de fixation sur une pièce (90) servant d'appui pour les supports longitudinaux (10, 12) ou s'appuyant sur les supports longitudinaux (10, 12).

9. Dispositif selon l'une des revendications précédentes, caractérisé en ce que la ou les pièces de serrage (16) et/ou la pièce (14) ou la pièce d'écartement de la liaison transversale sont en matière plastique renforcée de fibres de verre.

**FIG. 1**

**FIG. 2**

**FIG. 4**

**FIG. 3**

7

FIG. 5

FIG. 7

FIG. 6